# EUROPEAN PATENT APPLICATION

(11) **EP 4 687 021 A1**
(43) Date of publication of application: **04.02.2026**
(21) Application number: 25184229.0
(22) Date of filing: 20.06.2025
(51) Int. Cl.: G06F 3/12, G06F 9/4401, G06F 8/61, H04L 9/40, H04N 1/00

(54) **STORAGE MEDIUM, CONTROL METHOD, INFORMATION PROCESSING APPARATUS, AND PRINTING SYSTEM**

(30) Priority: 29.07.2024 JP 2024122445
(71) Applicant: CANON KABUSHIKI KAISHA, Tokyo 146-8501 (JP)
(72) Inventor: SUZUKI, Shinya, Tokyo, 146-8501 (JP)
(74) Representative: Canon Europe Limited

(57) **Abstract**

A storage medium storing a program for installing a driver for controlling a peripheral device in an information processing apparatus. The program causes, in a case where a certificate of the driver is set to be automatically installed in the information processing apparatus, the information processing apparatus to acquire the certificate, install the acquired certificate in the information processing apparatus, and install the driver in response to installing the certificate, without issuing a notification to a user.

## Description

### BACKGROUND

### Field of the Technology

The present invention relates to a storage medium storing a program for installing a driver, a control method, an information processing apparatus, and a printing system.

### Description of the Related Art

A printer driver for Windows^{®} is a representative print control program for controlling a printer. A driver set of the printer driver for Windows^{®} includes a catalog (CAT) file. A digital signature can be added to the catalog file to prevent tampering of the driver (e.g., refer to Japanese Patent Application Laid-Open No. 2014-48956).

A digital signature is obtained by encrypting, with a private key, a hash value of a file group consisting of a driver set. The hash value can be extracted by decrypting the digital signature with a public key, and it is possible to verify whether a content of each file in the driver set has not been changed by comparing the extracted hash value with the hash value in the actual driver set.

The catalog file also includes a certificate, and a certificate of a trusted issuer of an electronic signature (digital signature) is stored in a certificate store of an information processing apparatus.

In a case where a printer driver is installed in an information processing apparatus, some operating systems (OSs) display a screen for conforming with a user whether to install the printer driver depending on an issuer of an electronic signature added to a CAT file. For example, in a case where the certificate corresponding to the electronic signature is not stored in the certificate store, a confirmation screen is displayed.

A printer driver is also provided with an installation method that does not display a user interface (UI) screen during installation. This method is referred to as silent installation. Silent installation is used in a case where a terminal management service introduced in an office environment distributes and installs a printer driver in terminals (specifically, personal computers (PCs)). In the office environment using the silent installation method, the printer driver can be made available without imposing a burden on a terminal user.

However, when a printer driver is distributed and installed using a technique discussed in Japanese Patent Application Laid-Open No. 2014-48956, a confirmation screen is displayed during silent installation, and an operation by a terminal user is required, resulting in reducing convenience.

The present invention is therefore directed to improvement of operability in installation of a driver.

### SUMMARY

According to an aspect of the present invention, there is provided a storage medium as specified in claims 1 to 5. According to a second aspect of the present invention, there is provided a method as specified in claims 6 to 10. According to a third aspect of the present invention, there is provided an information processing apparatus as specified in claim 11. According to a fourth aspect of the present invention, there is provided a printing system as specified in claim 12.

Features of the present disclosure will become apparent from the following description of embodiments with reference to the attached drawings. The following description of embodiments is described by way of example.

### BRIEF DESCRIPTION OF THE DRAWINGS

Fig. 1 illustrates a system configuration.
Fig. 2 illustrates a hardware configuration of a computer.
Fig. 3 illustrates a software configuration of the computer.
Fig. 4 illustrates a file configuration of an installation set for a driver according to a first embodiment.
Fig. 5 illustrates transition of screens displayed by an installer.
Fig. 6 illustrates a file set by a system administrator and a user interface (UI) screen.
Fig. 7 illustrates a security warning screen displayed by an operating system (OS).
Fig. 8 illustrates a processing flow by the installer according to the first embodiment.

### DESCRIPTION OF THE EMBODIMENTS

An embodiment of the present invention will be described below with reference to the attached drawings. Each of the embodiments of the present invention described below can be implemented solely or as a combination of a plurality of the embodiments or features thereof where necessary or where the combination of elements or features from individual embodiments in a single embodiment is beneficial.

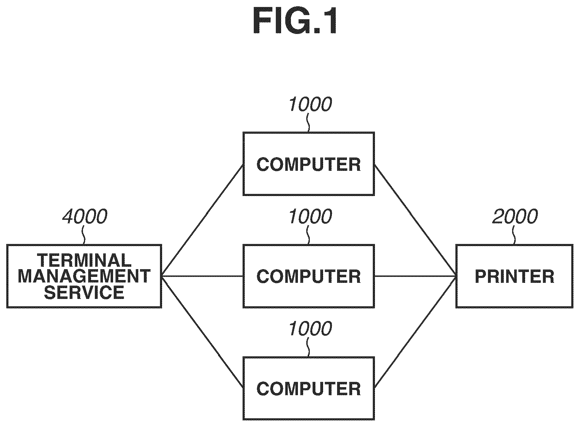

Fig. 1 illustrates a connection form of a computer 1000 serving as an example of an information processing apparatus, a printer 2000 (also referred to as peripheral device 2000) serving as an example of a peripheral device, and a terminal management service 4000 serving as an example of a server apparatus, in a printing system according to the present embodiment. Examples of the computer 1000 include a personal computer (PC), a smartphone, and a tablet terminal.

The computer 1000 and the printer 2000 are connected via a network, a Universal Serial Bus (USB), or the like and can communicate with each other. The computer 1000 and the terminal management service 4000 can also communicate with each other, and various types of control can be performed on the computer 1000, which is a terminal, by an instruction from the terminal management service 4000. For example, it is possible to control an application to be installed in a terminal and control a security access level of the terminal.

According to the present embodiment, an environment is assumed in which the terminal management service 4000 distributes (or outputs an instruction to install) a printer driver to a plurality of computers 1000 so that each of the computers 1000 can perform printing with the printer 2000.

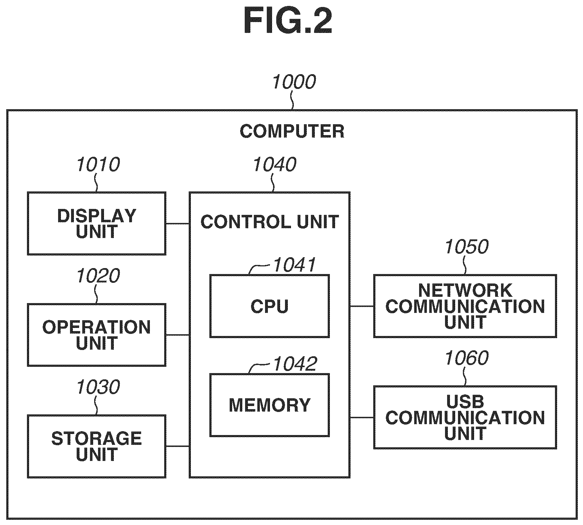

Fig. 2 is a block diagram illustrating a hardware configuration of the computer 1000.

The computer 1000 is entirely controlled by a control unit 1040 that is configured with a central processing unit (CPU) 1041 and a memory 1042. A display unit 1010 is an output device such as a display, and an operation unit 1020 is an input device such as a mouse, a keyboard, or a touch panel.

A storage unit 1030 is a storage medium such as a hard disk drive and a solid state drive (SSD) and stores various types of software necessary for the computer 1000 to operate. An operating system (OS) 1110 and a driver, which will be described below, are also stored in the storage unit 1030. A network communication unit 1050 is connected to the network to input and output data to and from an external apparatus. A USB communication unit 1060 inputs and outputs data to and from the external apparatus via USB connection. The computer 1000 and the printer 2000 are connected to each other via the network communication unit 1050 or the USB communication unit 1060.

All software processing according to the present embodiment is realized by loading software stored in the storage unit 1030 into the memory 1042 in the control unit 1040 and executing the software with the CPU 1041.

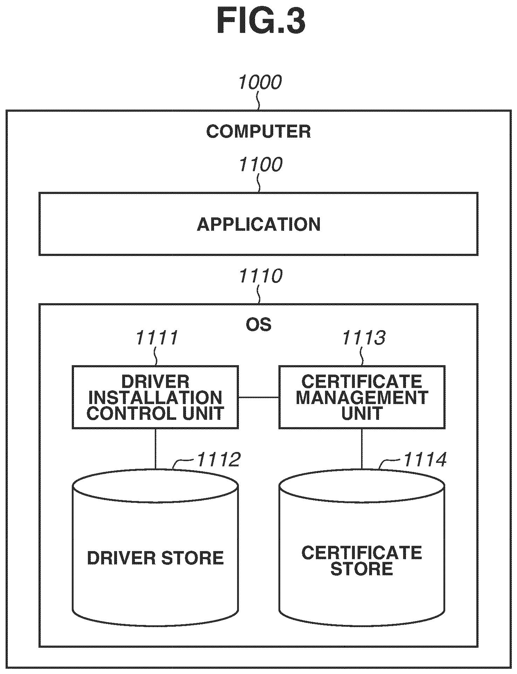

Fig. 3 is a block diagram illustrating a software configuration of the computer 1000, which is related to driver installation processing according to the present embodiment. All software is stored in the storage unit 1030. An application 1100 refers to arbitrary software such as word processing software and spreadsheet software, and an installer 1210 for a driver described below is also one of the applications 1100.

The OS 1110 is software that controls basic operations of the computer 1000. The OS 1110 includes a driver installation control unit 1111 and a certificate management unit 1113 and further includes data areas referred to as a driver store 1112 and a certificate store 1114.

The driver installation control unit 1111 performs control to install a driver prepared outside of the OS 1110 in the OS 1110. Here, the driver is software that controls the peripheral device 2000 from the computer 1000 and is typically provided by a vender that produces the peripheral device 2000. Installing the driver in the OS 1110 means that the driver provided by the vender is added to the OS 1110 so that the peripheral device 2000 can be used from the computer 1000 under the control of the OS 1110.

The driver installation control unit 1111 verifies the driver to be installed and stores the driver in the driver store 1112. Thus, drivers for various peripheral devices are stored in the driver store 1112. The certificate management unit 1113 manages a certificate registered in the OS 1110. The certificate store 1114 is managed by the certificate management unit 1113 and stores various certificates used by the OS 1110.

Here, a certificate certifies authenticity of a digital signature, and a relationship between a digital signature and a certificate can be likened to a relationship between a seal and a seal certificate. A certificate of an issuer trusted by an administrator or a terminal user of the computer 1000 is stored in the certificate store 1114.

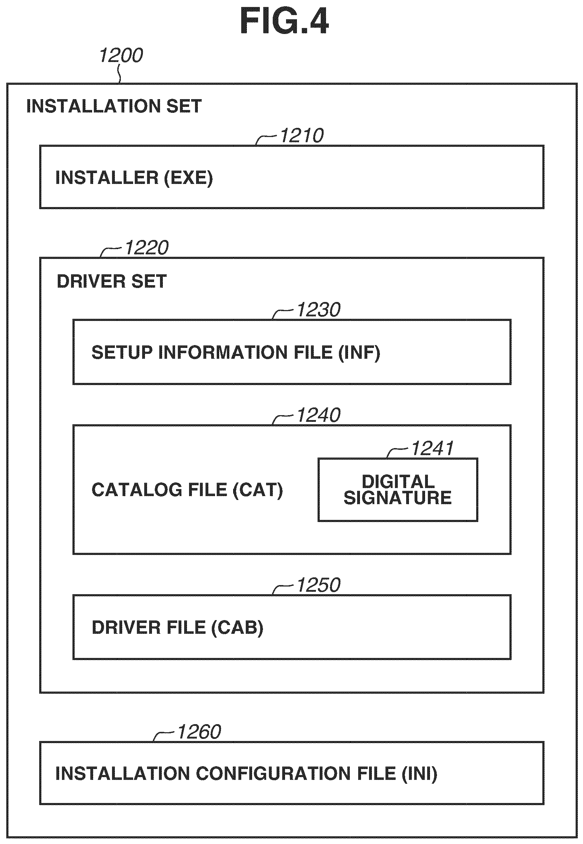

Fig. 4 illustrates a file configuration of an installation set 1200 for the driver according to the present embodiment. The installation set 1200 is a group of files provided by the vender and includes files described below.

The installer (EXE) 1210 is the application 1100 for installing the driver, and a terminal user having an administrator authority executes installation of the driver file 1250 in the OS 1110.

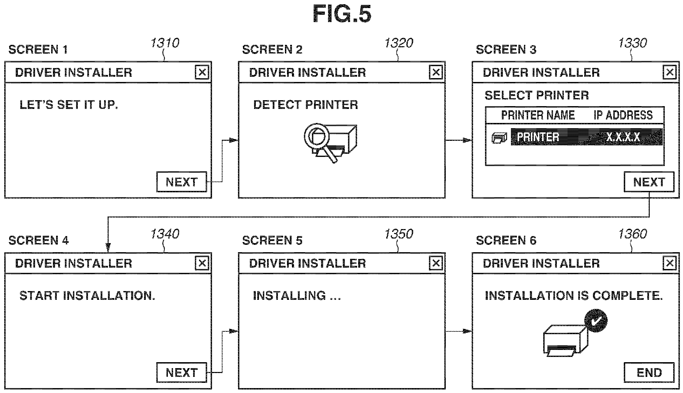

The installer (EXE) 1210 includes means for performing installation according to a user interface (UI) flow illustrated in Fig. 5 and means for performing silent installation that performs installation without displaying a UI. Processing of these means will be described below.

A driver set 1220 indicates a group of driver related files before installation and includes a setup information file (INF) 1230, a catalog file (CAT) 1240, and a driver file (CAB) 1250.

The setup information file (INF) 1230 describes information necessary to install the driver file 1250. Specifically, a type and a version of the driver, a file name of the catalog file 1240, a file name and an installation destination of the driver file 1250, and the like are described.

The catalog file (CAT) 1240 is used during installation of the driver file 1250 to verify the driver set 1220. The catalog file (CAT) 1240 includes a digital signature 1241 and a certificate of the driver file 1250 and is used to check whether the driver file 1250 has been tampered or not.

The driver file (CAB) 1250 is a main body of the driver to be installed and is a compressed file that includes an executable program and a data file for controlling the peripheral device 2000.

An installation configuration file (INI) 1260 describes information necessary for installation, a flag setting, and the like. The installer (EXE) 1210 reads the installation configuration file (INI) 1260 during installation and performs installation processing according to the described contents. Therefore, by using this mechanism, a system administrator can change the content of the installation configuration file (INI) 1260 and generate the installation set 1200 that is suitable for their own environment. A tool for newly generating the installation set 1200 using this mechanism may be provided to the system administrator in some cases.

Fig. 5 illustrates transition of screens displayed on the display unit 1010 of the computer 1000 by the installer 1210 in a case where a terminal user executes the installer 1210.

A screen 1 (1310) is displayed by the installer 1210 at start-up. When a "NEXT" button is pressed, the installer 1210 displays a screen 2 (1320). On the screen 2 (1320), a printer currently connected to the computer 1000 is detected. When the detection is completed, the installer 1210 displays a screen 3 (1330).

The screen 3 (1330) displays a list of printers detected on the screen 2 (1320) and prompts the terminal user to select the driver of which printer to install. When the "NEXT" button is pressed, the installer 1210 displays a screen 4 (1340). The screen 4

(1340) notifies the terminal user that installation of the driver is about to begin. When the "NEXT" button is pressed, the installer 1210 displays a screen 5 (1350) and starts installation of the driver.

The driver is installed by the installer 1210 calling an application programming interface (API) for installing the driver provided by the driver installation control unit 111 of the OS 1110.

At that time, the installer 1210 specifies the setup information file 1230 in the driver set 1220.

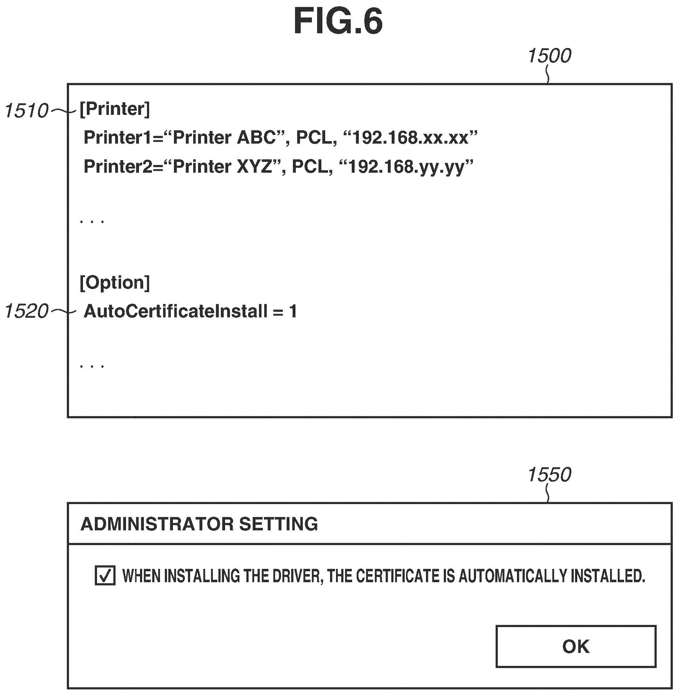

At that time, the OS 1110 may display a security warning screen depending on the driver set 1220 to be installed. The security warning screen will be described below with reference to Fig. 6. When the installation of the driver is completed, the installer 1210 displays a screen 6 (1360) to notify the terminal user of completion of the installation, and terminates the processing.

In contrast, the installer (EXE) 1210 includes a silent installation method as a method for performing installation without displaying a UI. The silent installation is operated in a case where the installer (EXE) 1210 is started by executing a command. In this case, there is no UI flow, so that the installation configuration file (INI) 1260 is used in which the information necessary for installation is described.

Information 1500 illustrated in Fig. 6 indicates a part of contents described in the installation configuration file (INI) 1260. Information 1510 describes, as examples, a queue name, a page description language (PDL) name, and a port name of the printer to be installed. In the example in Fig. 6, "Printer ABC", "PCL", and "192.168.xx.xx" respectively correspond to the queue name, PDL name, and port name of the printer.

In a typical installation UI flow of the installer (EXE) 1210, printer information detected in the search is used as a basis for installation processing. However, since there is no UI in the silent installation as described above, installation processing is performed based on the information described in the installation configuration file (INI) 1260.

According to the present embodiment, the above-described information is described in the installation configuration file (INI) 1260, but similar information can be specified as an argument for command execution to be able to perform the silent installation.

According to the present embodiment, information about an automatic certificate installation setting is described in the installation configuration file (INI) 1260. For example, a setting "AutoCertificateInstall" indicating the automatic certificate installation setting is described as in information 1520, and a setting value is defined. It is thereby possible to control installation processing of the certificate during the installation processing performed by the installer (EXE) 1210.

According to the present embodiment, in a case where the value of "AutoCertificateInstall" is 1, it indicates that the automatic certificate installation setting is on. In a case where the value of "AutoCertificateInstall" is 0 or "AutoCertificateInstall" is not defined, it indicates that the automatic certificate installation setting is off.

The information (automatic certificate installation setting) 1520 can be described by editing text data of the installation configuration file (INI) 1260 or can also be set using the tool for generating the installation set 1200 described above.

For example, there is a tool 1550 as illustrated in Fig. 6 that generates the installation set 1200 having a UI that can change the automatic certificate installation setting 1520. The system administrator changes the setting of the automatic certificate installation setting 1520 using this tool. Specifically, the system administrator rewrites the setting of "AutoCertificateInstall", which indicates the automatic certificate installation setting, to 1 and newly generates the installation set 1200 that includes the updated installation configuration file (INI) 1260.

The newly generated installation set 1200 is set for the automatic certificate installation by the system administrator and thus can be determined to be approved by the system administrator.

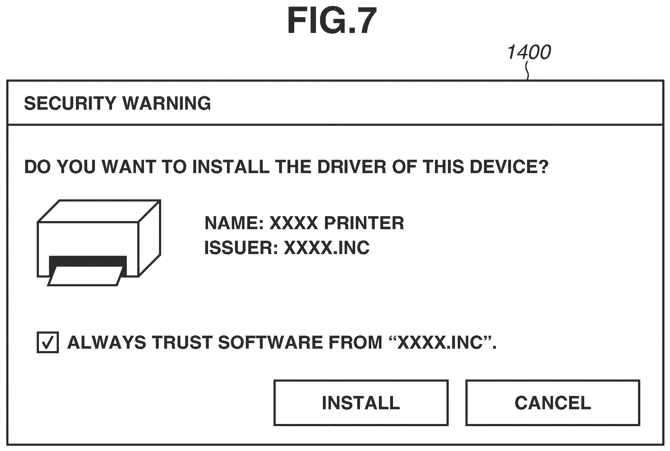

Fig. 7 illustrates a security warning screen 1400 displayed by the OS 1110 in installation of the driver during the installer 1210 displaying the above-described screen 5 (1350).

When the API for installing the driver is called, the OS 1110 acquires the file name of the catalog file 1240 described in the specified setup information file 1230. The OS 1110 then refers to the catalog file 1240 of the acquired file name and identifies the certificate corresponding to the digital signature 1241 included in the catalog file 1240.

In a case where the identified certificate does not exist in the certificate store 1114 of the OS 1110, the OS 1110 displays the security warning screen 1400. The security warning screen 1400 displays information about the issuer of the digital signature 1241 and prompts the terminal user to determine whether to install the driver with the digital signature 1241 of the issuer. When an "INSTALL" button is pressed, the OS 1110 starts installation of the specified driver. When a "CANCEL" button is pressed, the OS 1110 cancels installation of the driver.

The security warning screen 1400 further includes a check box for checking whether to always trust the driver with the digital signature 1241 of the same issuer. In a case where this setting is on and the "INSTALL" button is pressed, the OS 1110 installs the corresponding certificate in the certificate store 1114. The driver with the same digital signature can therefore be installed without the security warning screen 1400 displaying in installing from the next time onward.

In contrast, in a case where this setting is off and the "INSTALL" button is pressed, the OS 1110 displays the security warning screen 1400 again the next time the driver with the same digital signature is installed. In this way, the OS 1110 displays the security warning screen 1400 to the terminal user and provides an effect of preventing a driver signed by a suspicious issuer from being installed without the terminal user's knowledge.

Next, distribution and installation of a printer driver according to the present embodiment will be described.

In a case where the system administrator distributes and installs the driver using the terminal management service 4000, distribution and installation are realized by distributing the installation set 1200 and a program for executing installation such as a batch file to the computer 1000 and causing the computer 1000 to execute the program.

Thus, according to the present embodiment, the installer (EXE) 1210 is operated on the computer 1000, and silent installation processing is also performed by the computer 1000. The installation set 1200 distributed at this time includes the installation configuration file (INI) 1260 in which the automatic certificate installation is set by the system administrator.

At this time, a distribution method can be set in detail in the terminal management service 4000. For example, the system administrator can also set to distribute, to each terminal user, the driver in which the above-described automatic certificate installation setting is on and the driver in which the automatic certificate installation setting is off.

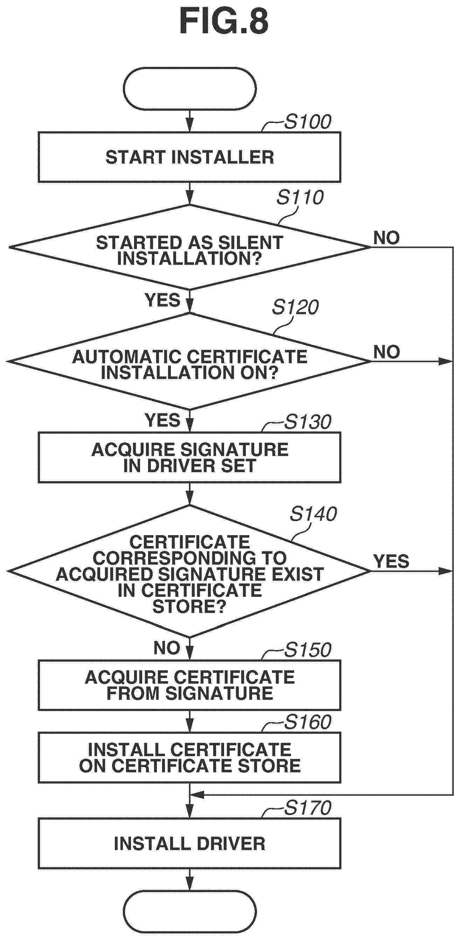

Next, a flow for the installer 1210 according to the present embodiment to install the driver in the OS 1110 will be described with reference to Fig. 8 focusing on characteristic features of the present invention. Processing described here is all executed by loading the installer 1210 stored in the storage unit 1030 in the computer 1000 into the memory 1042 and executing the installer 1210 by the CPU 1041.

In step S100, the installer 1210 is started in response to a start instruction from the terminal user or the terminal management service 4000.

In step S110, the installer 1210 determines whether the start instruction is started as silent installation. In a case where it is not started as silent installation (NO in step S110), the processing proceeds to step S170.

In step S170, the installer 1210 installs the driver. In a case where the certificate does not exist in the certificate store at this stage, the security warning screen 1400 is displayed during the processing in step S170.

In step S110, if it is determined that the start instruction is started as silent installation (YES in step S110), the processing proceeds to step S120.

In step S120, the installer 1210 determines whether the automatic certificate installation setting described in the installation configuration file (INI) 1260 is on. In a case where the automatic certificate installation setting is off (NO in step S120), the processing proceeds to step S170. The processing in step S170 and subsequent steps is described above and thus omitted.

In a case where the automatic certificate installation setting is on (YES in step S120), the processing proceeds to step S130.

In step S130, the installer 1210 acquires the digital signature 1241 from the catalog file 1240 in the driver set 1220.

In step S140, the installer 1210 then identifies the certificate from the acquired digital signature 1241 and checks whether the certificate exists in the certificate store 1114. Specifically, the installer 1210 acquires a serial number of the certificate included in the digital signature 1241 and confirms whether the certificate with the same serial number exists in the certificate store 1114. In a case where the corresponding certificate exists in the certificate store 1114 (YES in step S140), the processing proceeds to step S170. The processing in step S170 and subsequent steps is described above and thus omitted.

In a case where the corresponding certificate does not exist in the certificate store 1114 (NO in step S140), the processing proceeds to step S150.

In step S150, the installer 1210 acquires the certificate from the digital signature 1241 and advances the processing to step S160.

In step S160, the installer 1210 then installs the certificate in the certificate store 1114. The certificate is installed by the installer 1210 calling an API for installing the certificate provided by the certificate management unit 1113 of the OS 1110.

Finally, in step S170, the installer 1210 installs the driver in the OS 1110. In this way, in a case where the silent installation and the automatic certificate installation setting are on, the certificate for the digital signature 1241 included in the driver set 1220 before installation is installed in the OS 1110 in advance, and then the driver is installed. Thus, the driver can be installed without displaying the security warning screen 1400 by the OS 1110.

The processing by the installer 1210 according to the present embodiment has been described above. The installer 1210 operates as described in the present embodiment, and thus the security warning screen 1400 will be no longer suddenly displayed by the OS 1110 during installation. Even in an environment in which a driver is distributed and installed, the driver can therefore be made available without imposing a burden on a terminal user.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

## Claims

1. A non-transitory computer-readable storage medium storing a program for installing a driver (1250) for controlling a peripheral device (2000) in an information processing apparatus (1000), the program when executed on the information processing apparatus (1000) causing the information processing apparatus (1000) to perform a control method comprising:
performing (S110, S120), in a case where a certificate of the driver is set to be automatically installed in the information processing apparatus (1000), the following processing without issuing a notification to a user;
acquiring (S150) the certificate;
installing (S160) the acquired certificate in the information processing apparatus (1000); and
installing (S170) the driver in response to installing the certificate.

2. The non-transitory computer-readable storage medium according to claim 1, wherein a server apparatus (4000) for outputting an instruction to install the driver to a plurality of the information processing apparatuses (1000) is set to automatically install the certificate of the driver in the information processing apparatus (1000).

3. The non-transitory computer-readable storage medium according to claim 2,
wherein the program is included in an installation set that includes a driver set of the driver and an installation configuration file in which a setting of installation processing for the driver is described, and
wherein the server apparatus (4000) writes, to the installation configuration file, a content indicating that the certificate of the driver is to be automatically installed in the information processing apparatus (1000).

4. The non-transitory computer-readable storage medium according to claim 1, wherein the certificate is a certificate corresponding to a digital signature (1241) included in a driver set of the driver.

5. The non-transitory computer-readable storage medium according to claim 1, wherein the certificate is installed to be stored in a certificate store (1114) of the information processing apparatus (1000).

6. A method for controlling an information processing apparatus (1000) to install, by executing a program, a driver for controlling a peripheral device (2000) in the information processing apparatus, the method comprising:
issuing no notification to a user in a case where a certificate of the driver is set to be automatically installed in the information processing apparatus (S110, S120);
acquiring (S150) the certificate;
installing (S160) the acquired certificate in the information processing apparatus (1000); and
installing (S170) the driver in response to installing the certificate.

7. The method according to claim 6, wherein a server apparatus (4000) for outputting an instruction to install the driver to a plurality of information processing apparatuses (1000) is set to automatically install the certificate of the driver in the information processing apparatus (1000).

8. The method according to claim 7,
wherein the program is included in an installation set including a driver set of the driver and an installation configuration file (1260) in which a setting of installation processing for the driver is described, and
wherein the server apparatus (4000) writes, to the installation configuration file (1260), a content indicating that the certificate of the driver is to be automatically installed in the information processing apparatus (1000).

9. The method according to claim 6, wherein the certificate is a certificate corresponding to a digital signature included in a driver set of the driver.

10. The method according to claim 6, wherein the certificate is installed to be stored in a certificate store (1114) of the information processing apparatus (1000).

11. An information processing apparatus (1000) configured to:
issue no notification to a user in a case where a certificate of a driver for controlling a peripheral device (2000) is set to be automatically installed in the information processing apparatus (1000);
acquire the certificate;
install the acquired certificate on the information processing apparatus (1000); and
install the driver in response to installing the certificate.

12. A printing system comprising an information processing apparatus (1000), a peripheral device (2000) for communicating with the information processing apparatus (1000), and a server apparatus (4000) for communicating with the information processing apparatus (1000),
wherein the server apparatus (4000) outputs an instruction to install a driver to a plurality of information processing apparatuses (1000), and
wherein, in a case where the server apparatus (4000) is set to automatically install a certificate of a driver for controlling the peripheral device (2000) in the information processing apparatus, the information processing apparatus is configured to:
issue no notification to a user,
acquire the certificate,
install the acquired certificate on the information processing apparatus, and
install the driver in response to installing the certificate.
